# EUROPÄISCHE PATENTANMELDUNG

(11) **EP 4 746 140 A1**
(43) Veröffentlichungstag der Anmeldung: **20.05.2026**
(21) Anmeldenummer: 24212829.6
(22) Anmeldetag: 13.11.2024
(51) Int. Cl.: H01M 50/147, H01M 50/188, H01M 50/55, H01M 50/553, H01M 50/566, H01M 50/567, H01M 50/552, H01M 50/528, H01M 50/562

(54) **VERFAHREN ZUM HERSTELLEN EINER DECKELANORDNUNG FÜR EINE BATTERIEZELLE**

(71) Anmelder: Cellforce Group GmbH, 72138 Kirchentellinsfurt (DE)
(72) Erfinder: Gräf, Jürgen, 72072 Tübingen (DE)
(74) Vertreter: Müller Schupfner & Partner Patent- und Rechtsanwaltspartnerschaft mbB (Muc)

(57) **Zusammenfassung**

Die Offenbarung betrifft ein Verfahren zum Herstellen einer Deckelanordnung für eine Batteriezelle, wobei mindestens ein Terminalzapfen an einem innenseitigen Ende mit mindestens einem Kollektor stoffschlüssig verbunden wird, der mindestens eine Terminalzapfen mit zumindest einer Dichtung versehen wird, wobei der mindestens eine Terminalzapfen durch mindestens eine in einen Zelldeckel eingebrachte Öffnung hindurchgeschoben und an einem außenseitigen Ende stoffschlüssig mit einer Terminalplatte zum Ausbilden eines Batteriepols verbunden wird, wobei die mindestens eine Dichtung zwischen dem Kollektor und der Terminalplatte verpresst wird und dazu eingerichtet ist, im verpressten Zustand einen Spalt zwischen dem Terminalzapfen in der Öffnung und dem Zelldeckel abzudichten. Des Weiteren betrifft die Offenbarung eine Deckelanordnung sowie eine Batteriezelle mit einer Deckelanordnung.

## Beschreibung

Die Erfindung betrifft ein Verfahren zum Herstellen einer Deckelanordnung für eine Batteriezelle. Des Weiteren betrifft die Erfindung eine Deckelanordnung sowie eine Batteriezelle mit einer Deckelanordnung.

Bei der Herstellung von Batteriezellen sind neben Pouch-Zellen auch sogenannten Hardcase-Zellen bekannt. Derartige Batteriezellen besitzen ein starres metallisches Gehäuse und können geometrisch in prismatischer Form oder in Form von Rundzellen ausgebildet sein. Die jeweiligen Batteriepole sind an den sogenannten Terminals der Batteriezelle in erhabener Form auf der Außenseite positioniert, um eine vereinfachte, elektrische Anbindung zu ermöglichen. Üblicherweise sind die Batteriepole in eine Deckelanordnung der Batteriezelle integriert, die das Zellgehäuse verschließt.

Die Deckelanordnung der Batteriezelle weist einen Zelldeckel mit einer Öffnung auf. Üblicherweise sind Zelldeckel aus einem Metall, wie beispielsweise Aluminium, Edelstahl oder Stahl mit einer Nickelbeschichtung, gefertigt. Zum Ausbilden des Batteriepols, welcher mit einem zum Innenvolumen des Zellgehäuses zugewandten Kollektor verbunden ist, wird durch die Öffnung im Zelldeckel ein Terminalniet oder - zapfen aus Metall geführt. Der Terminalniet oder -zapfen ist in einem dem Innenvolumen des Zellgehäuses zugewandten Bereich mit einem tellerförmigen Bund versehen, durch welchen eine auf den Terminalniet oder -zapfen gesteckte Dichtung aus Kunststoff axial verpresst wird und die Öffnung abdichtet.

In einem dem Innenvolumen des Zellgehäuses abgewandten Bereich des Zelldeckels ist eine Terminalplatte aus Metall zum Ausbilden des Batteriepols angeordnet, durch welche Strom der Batteriezelle zugeleitet oder aus dieser entnommen wird. Zwischen dem Batteriepol und dem Zelldeckel befindet sich üblicherweise eine Isolation aus Kunststoff, um den Batteriepol elektrisch von dem Zelldeckel und dem Zellgehäuse zu entkoppeln. Ein vom Innenvolumen des Zellgehäuses abgewandtes Ende des Terminalnietes wird durch eine entsprechende Aussparung in der Terminalplatte geschoben und vernietet. Bei diesem Vorgang wird auch die axial wirkende Dichtung verpresst. Durch das Verpressen wird auch der Querschnitt zur Stromübertragung vergrößert, da der Nietkopf und Bund am Niet zusätzlich Strom durch kraftschlüssige Verpressung übertragen. Weiterhin können hierdurch Toleranzen ausgeglichen werden. Zum Optimieren der Langzeithaltbarkeit des Batteriepols kann die Nietverbindung durch Schweißen verstärkt werden.

Es sind auch Verfahren bekannt, bei welchen der Terminalzapfen nur durch Schweißverbindungen mit der Terminalplatte verbunden wird. Eine Nietverbindung wird hierbei nicht benötigt. Ein Verpressen des Zelldeckels, der Dichtungen, des Terminalzapfens und der Terminalplatte erfolgt durch eine äußere Krafteinwirkung.

An einem zum Innenvolumen des Zellgehäuses zugewandten Ende der Deckelanordnung, d.h. unterhalb des tellerförmigen Bundes des Terminalzapfens, wird der sogenannte Kollektor aus Metall angebracht. Der Kollektor wird über den Terminalzapfen elektrisch mit dem Batteriepol verbunden. An einem den Pluspol ausbildenden Batteriepol ist der Kollektor üblicherweise aus Aluminium und an einem den Minuspol ausbildenden Batteriepol ist der Kollektor üblicherweise aus Kupfer hergestellt. Zellseitig werden an den Kollektor die unbeschichteten Enden, sogenannte Zellverbinder, Anoden- und Kathodenfolien des Zellstapels geschweißt.

Nachteilig bei den bisher verwendeten Lösungen zum Herstellen von Deckelanordnungen sind die große Bauhöhe sowie die begrenzte Stromtragfähigkeit. Weiterhin besteht bei größer dimensionierten Batteriepolen die Gefahr einer Verformung aufgrund der Verpresskraft und der Einwirkung von mechanischen Kräften von elektrischen Leitungen, die an den Batteriepolen angeschlossen sind.

Die vorliegende Erfindung hat daher die Aufgabe, ein Verfahren zum Herstellen einer Deckelanordnung und eine Deckelanordnung für Batteriezellen zu schaffen, die eine geringere Bauhöhe aufweist. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Herstellen einer Deckelanordnung für eine Batteriezelle bereitgestellt. In einem Schritt wird mindestens ein Terminalzapfen an einem innenseitigen Ende mit mindestens einem Kollektor stoffschlüssig verbunden.

Das innenseitige Ende entspricht einem Abschnitt des Terminalzapfens, welcher in einem in eine Batteriezelle eingebauten Zustand der Deckelanordnung einem Innenvolumen der Batteriezelle bzw. eines Zellgehäuses zugewandt ist. Analog hierzu ist ein außenseitiges Ende des Terminalzapfens als ein Abschnitt des Terminalzapfens definiert, welcher in einem in eine Batteriezelle eingebauten Zustand der Deckelanordnung von dem Innenvolumen des Zellgehäuses weggerichtet ist.

In einem weiteren Schritt des Verfahrens wird der mindestens eine Terminalzapfen mit zumindest einer Dichtung versehen. Die Dichtung kann hierzu auf den Terminalzapfen mechanisch aufgeschoben oder auf den Terminalzapfen appliziert werden. Beispielsweise kann die Dichtung durch ein Spritzgussverfahren oder Klebeverfahren auf den Terminalzapfen appliziert werden.

Der mindestens eine Terminalzapfen wird anschließend entlang einer Axialrichtung durch mindestens eine in einen Zelldeckel eingebrachte Öffnung hindurchgeschoben und an dem außenseitigen Ende stoffschlüssig mit einer Terminalplatte zum Ausbilden eines Batteriepols verbunden. Beim Hindurchschieben des Terminalzapfens durch die Öffnung entlang der Axialrichtung kann die Dichtung vollständig oder zumindest bereichsweise entlang der Axialrichtung durch die Öffnung des Zelldeckels hindurchragen. Vorteilhafterweise umgibt die Dichtung den Terminalzapfen umfangsseitig im Bereich der Öffnung des Zelldeckels.

Die Axialrichtung ist als eine Richtung entlang einer Ausdehnung des mindestens einen Terminalzapfens definiert, welche das außenseitige Ende und das innenseitige Ende des Terminalzapfens miteinander verbindet bzw. durch diese verläuft.

Erfindungsgemäß wird die mindestens eine Dichtung, insbesondere entlang der Axialrichtung, in einem Bereich zwischen dem Kollektor und der Terminalplatte verpresst. Die Dichtung ist dazu eingerichtet, im verpressten Zustand einen Spalt zwischen dem Terminalzapfen in der Öffnung und dem Zelldeckel abzudichten.

Ein entsprechendes Abdichten des Spalts kann beispielsweise durch ein elastisches Verformen der Dichtung durch das Verpressen der Dichtung zwischen dem Kollektor und der Terminalplatte erfolgen. Hierbei kann die Dichtung durch elastisches Verformen eine lokale Volumenzunahme im Bereich des Spalts erlangen und eine Dichtwirkung erzielen. Alternativ oder zusätzlich kann die Dichtung durch das Verpressen lokal derart verformt und/oder gepresst werden, dass der Spalt an einer dem außenseitigen Ende des Terminalzapfens zugewandten Seite und/oder an einer dem innenseitigen Ende des Terminalzapfens zugewandten Seite fluiddichtend bedeckt bzw. verschlossen wird.

Durch das Verpressen der Dichtung zwischen dem Kollektor und der Terminalplatte kann der Term inalzapfen in seiner Ausdehnung entlang der Axialrichtung verkleinert werden. Diese Größenreduzierung erfolgt insbesondere durch den Wegfall eines tellerförmigen Bundes oder eines Abschnitts des Terminalzapfens, welcher anstelle des Kollektors zum Verpressen der Dichtung eingerichtet wäre. Diese Maßnahme ermöglicht auch die Reduzierung der Bauhöhe der gesamten Deckelanordnung, die mit einer Gewichtsreduzierung einhergeht.

Gemäß einem weiteren Aspekt der Erfindung wird eine Deckelanordnung bereitgestellt. Die Deckelanordnung weist mindestens einen Terminalzapfen, mindestens einen Kollektor, einen Zelldeckel, mindestens eine Dichtung und eine Terminalplatte zum Ausbilden eines Batteriepols auf. Der Terminalzapfen ist an einem innenseitigen Ende stoffschlüssig mit dem Kollektor und an einem außenseitigen Ende stoffschlüssig mit der Terminalplatte verbunden. Der mindestens eine Terminalzapfen ragt durch zumindest eine Öffnung im Zelldeckel hindurch. Ein resultierender Spalt zwischen dem Zelldeckel und der Terminalplatte, insbesondere entlang einer Radialrichtung, quer zur Axialrichtung, ist durch die Dichtung fluiddicht verschlossen. Die Dichtung ist zwischen der Terminalplatte und dem Kollektor in einem verpressten Zustand angeordnet.

Vorteilhafterweise ist die Deckelanordnung durch das erfindungsgemäße Verfahren hergestellt.

Verpresst bedeutet insbesondere unter einer Krafteinwirkung angeordnet, sodass die Dichtung unter einer axialen Krafteinwirkung sich beispielsweise entlang einer Radialrichtung ausdehnen und/oder verformen und somit dichtend wirken kann. Die stoffschlüssige Verbindung des Terminalzapfens mit dem Kollektor und der Terminalplatte hält die Krafteinwirkung bzw. den resultierenden Druck auf die Dichtung aufrecht.

Nach einem weiteren Aspekt der Erfindung wird eine Batteriezelle bereitgestellt. Die Batteriezelle kann beispielsweise in Form einer Lithium-Ionen Zelle ausgestaltet sein. Die Batteriezelle weist ein Zellgehäuse auf, welches ein Innenvolumen ausbildet. Das Zellgehäuse kann vorzugsweise starr ausgestaltet und beispielsweise aus einem Metall hergestellt sein. In dem Innenvolumen des Zellgehäuses ist mindestens ein Zellstapel angeordnet. Das Zellgehäuse der Batteriezelle ist zumindest einseitig durch eine erfindungsgemäße Deckelanordnung verschlossen.

Die reduzierte Bauhöhe der Deckelanordnung resultiert auch in einer Verringerung des elektrischen Widerstands bei einem Übergang durch die Deckelanordnung. Weiterhin können mehrere Terminalzapfen vorgesehen sein, um den Batteriepol mit dem Kollektor elektrisch zu verbinden. Diese Maßnahme ermöglicht eine weitere Senkung des elektrischen Widerstands bzw. eine höhere Stromtragfähigkeit der Deckelanordnung bei gleichzeitiger Optimierung der mechanischen Robustheit der Deckelanordnung.

Der zumindest eine Terminalzapfen kann technisch besonders einfach gegenüber der Öffnung im Zelldeckel ausgerichtet werden, wenn der dieser formschlüssig in mindestens eine in den Kollektor eingebrachte Senkung oder Öffnung eingesetzt wird.

Vorteilhafterweise kann die Senkung oder Öffnung im Kollektor in seiner Position an eine Position der Öffnung im Zelldeckel angepasst sein. Der mindestens eine in die Senkung oder Öffnung eingesetzte Terminalzapfen wird anschließend durch Reibschweißung und/oder durch Löten und/oder durch Schweißen mit dem Kollektor verbunden.

Je nach Ausgestaltung des Verfahrens kann die in den Kollektor eingebrachte Senkung oder Öffnung dazu eingesetzt werden, den Terminalzapfen mittels Laser-Überlappschweißung oder mittels einer Stumpfnaht-Schweißung mit dem Kollektor zu verbinden. Bei der Laser-Überlappschweißung muss vorteilhafterweise kein Spalt verschlossen werden, so dass die nötige Dichtigkeit der Anbindung des Terminalzapfens an den Kollektor prozesssicher gewährleistet werden kann.

Gemäß einem weiteren Ausführungsbeispiel ist der mindestens eine Terminalzapfen am innenseitige Ende und am außenseitigen Ende aus einem Metall, insbesondere ein und demselben Metall, ausgebildet.

Bei einer weiteren Ausgestaltung wird der mindestens eine, aus einem Metall ausgebildete Terminalzapfen durch Reibschweißen mit dem Kollektor verbunden. Der Terminalzapfen ist hierdurch einteilig bzw. monolithisch aus einem Metall hergestellt.

Die Reibschweißung ermöglicht die stoffschlüssige Verbindung von verschiedenen Metallen, wobei sich an der vollflächigen und damit besonders stromtragfähigen Schweißstelle zwischen dem Kollektor und dem Terminalzapfen eine intermetallische Phase, beispielsweise in Form einer Al-Cu-Phase, ausbildet.

Durch das Reibschweißen kann der Terminalzapfen trotz voneinander abweichenden Materialien mit dem Kollektor verbunden werden. Somit kann beispielsweise ein Terminalzapfen aus Aluminium auf einen Kollektor aus Kupfer oder ein Terminalzapfen aus Kupfer auf einen Kollektor aus Aluminium geschweißt werden. Hierfür ist ein sogenannter Bi-Metall Terminalzapfen nicht erforderlich, sodass die Deckelanordnung kosteneffizienter hergestellt werden kann.

Nach einer weiteren Ausführungsform wird eine durch die Reibschweißung resultierende Schweißwulst durch ein Einbringen einer Schweißnaht zwischen dem Kollektor und dem mindestens einen Terminalzapfen verschlossen. Je nach Ausgestaltung kann die Schweißwulst auch durch Löten oder Kleben verdeckt werden.

Bei einer alternativen Ausführungsform weist der mindestens eine Terminalzapfen einen Bund auf, welcher durch das Einbringen der Reibschweißung mit dem Kollektor zur Anlage gebracht wird. Die durch die Reibschweißung resultierende Schweißwulst wird durch den Bund verschlossen bzw. verdeckt.

Die seitlich undefiniert herausgedrückte Schweißwulst beim Reibschweißen des Terminalzapfens mit dem Kollektor kann durch den Bund am Terminalzapfen effektiv verdeckt werden, um ein unkontrolliertes Lösen von Metallspänen oder Metallspritzern zu unterbinden.

Durch die Reibschweißung kann der Aufbau der Deckelanordnung vereinfacht und die Herstellungskosten gesenkt werden. Durch den Entfall eines notwendigen Metallübergangs bzw. einer Aluminium-Kupfer-Verbindungsstelle im Terminalzapfen kann der Terminalzapfen kosteneffizienter ausgestaltet sein. Eine entsprechende Aluminium-Kupfer-Verbindungsstelle wird somit zwischen dem Terminalzapfen und dem Kollektor direkt durch das Reibschweißen ausgebildet. Für diese Ausgestaltung kann der mindestens eine Terminalzapfen vorzugsweise rotationssymmetrisch gegenüber der Axialrichtung bzw. Axialachse geformt sein.

Durch die prinzipbedingt vollflächige Reibschweißung, wird weiterhin der Stromleitungsquerschnitt bei einem Übergang zwischen dem Terminalzapfen und dem Kollektor maximiert. Durch die Terminaldichtung mittels der Dichtung und/oder durch die Bedeckung der Schweißwulst mit einer Schweißnaht oder dem Bund des Terminalzapfens wird auch der Zutritt von Elektrolyt aus dem Zellinneren an die Aluminium-Kupfer-Verbindungsstelle bzw. die Reibschweißung verhindert, durch welches sonst durch die Bildung eines Lokalelementes zu elektrochemischer Korrosion resultieren würde.

Es versteht sich, dass die möglichen Materialkombinationen und die Reihenfolge der Materialien sich bei einer Deckelanordnung für einen Pluspol und einer Deckelanordnung für einen Minuspol unterscheiden können. Beispielsweise kann der Kollektor bei einer einen Pluspol ausbildenden Deckelanordnung aus Aluminium und bei einer einen Minuspol ausbildenden Deckelanordnung aus Kupfer bestehen. Der Terminalzapfen kann bei beiden Polen vollständig aus Kupfer oder vollständig aus Aluminium bestehen.

Die im Rahmen der Beschreibung beispielhaft genannten Materialien in Form von Aluminium und Kupfer sind nicht beschränkend anzusehen. Vielmehr können beliebige Materialien, insbesondere Metalle und Metalllegierungen, verwendet werden, die für die Verwendung in einer Batteriezelle geeignet sind.

Gemäß einem weiteren Ausführungsbeispiel ist der mindestens eine Terminalzapfen am innenseitige Ende und am außenseitigen Ende aus unterschiedlichen Metallen ausgebildet. Somit kann der Terminalzapfen innerhalb seiner Ausdehnung entlang der Axialrichtung eine Bi-Metall-Verbindungsstelle, wie beispielsweise eine Aluminium-Kupfer-Verbindungsstelle, aufweisen.

Beispielsweise kann der Terminalzapfen an einem dem aus Kupfer hergestellten Kollektor zugewandten Ende bzw. innenseitigen Ende aus Kupfer bestehen und am außenseitigen Ende aus Aluminium bestehen, um eine besonders komfortable, insbesondere artreine, Schweißung oder Lötung mit dem Kollektor und der Terminalplatte zu ermöglichen. Somit gleicht gemäß einer vorteilhaften Ausführungsform das Metall des Terminalzapfens an dem innenseitigen Ende einem Metall des Kollektors und das Metall des Terminalzapfens an dem außenseitigen Ende einem Metall der Terminalplatte.

Ein derart ausgestalteter Terminalzapfen aus zwei Materialien kann durch Reibschweißen und/oder durch Löten und/oder durch Nieten und/oder Schweißen mit dem Kollektor und/oder der Terminalplatte verbunden werden.

In einem Verbindungsbereich des Terminalzapfens mit dem Kollektor und/oder der Terminalplatte können Vertiefungen bzw. Senkungen vorgesehen sein, um eine Positionierung des mindestens einen Terminalzapfens umzusetzen. Von einer dem Terminalzapfen gegenüberliegenden Seite des Kollektors und/oder der Terminalplatte können dann Überlappschweißungen oder Lötungen realisiert werden. Beispielsweise muss bei der Laser-Überlappschweißung des Terminalzapfens durch einen Materialabschnitt des Kollektors und/oder der Terminalplatte im Bereich der Senkung oder Vertiefung kein Spalt verschlossen werden, sodass die nötige Dichtigkeit der Anbindung des Terminalzapfens prozesssicher gewährleistet wird.

Die Anpresskraft der Dichtung zwischen dem Kollektor und der Terminalplatte kann technisch besonders einfach ausgebildet und aufrechterhalten werden, wenn die mindestens eine Dichtung zwischen dem Kollektor und der Terminalplatte durch Vernieten des Terminalzapfens verpresst wird.

Die zum stoffschlüssigen Verbinden des mindestens einen Terminalzapfens mit dem Kollektor und/oder der Terminalplatte verwendete Verbindungstechnologie kann beliebig gewählt werden, wenn die mindestens eine Dichtung zwischen dem Kollektor und der Terminalplatte durch eine externe Krafteinwirkung verpresst wird. Hierdurch kann ein Nieten des Terminalzapfens, durch welches gleichzeitig eine Anpresskraft auf die Dichtung ausgebildet wird, entfallen, sodass der Terminalzapfen beispielsweise ausschließlich durch Laserschweißen stoffschlüssig mit dem Kollektor und/oder der Terminalplatte verbunden werden kann.

Die Deckelanordnung kann technisch besonders einfach hergestellt werden, wenn der Terminalzapfen rotationssymmetrisch, insbesondere im Wesentlichen zylinderförmig, ausgestaltet ist. Bevorzugterweise wird die zumindest eine Dichtung gegenüber dem Terminalzapfen entlang einer Axialrichtung und/oder Radialrichtung im Spalt und/oder im Bereich des Spalts verpresst. Durch diese Maßnahme können handelsübliche Dichtungen und/oder O-Ringe eingesetzt werden, die beispielsweise einen L-förmigen oder X-förmigen Querschnitt aufweisen, um eine Dichtwirkung im Bereich des Spalts umzusetzen.

Gemäß einem weiteren Ausführungsbeispiel werden mindestens zwei Terminalzapfen an ihren innenseitigen Enden mit einem gemeinsamen Kollektor oder mit jeweils einem Kollektor stoffschlüssig verbunden. Bevorzugterweise werden die Terminalzapfen mit jeweils einer Dichtung versehen, wobei die Terminalzapfen durch korrespondierende, in einen Zelldeckel eingebrachte Öffnungen hindurchgeschoben und an ihren außenseitigen Enden stoffschlüssig mit einer gemeinsamen Terminalplatte oder an unterschiedlichen Terminalplatten zum Ausbilden eines Batteriepols verbunden werden. Vorteilhafterweise werden die Dichtungen zwischen dem mindestens einen Kollektor und der mindestens einen Terminalplatte verpresst. Durch diese Maßnahme wird die Stromtragfähigkeit der Deckelanordnung aufgrund eines vergrößerten Stromleitungsquerschnitts erhöht. Mit einer zunehmenden Anzahl von verwendeten Terminalzapfen, die den Kollektor elektrisch leitend mit der Terminalplatte verbinden kann die Stromtragfähigkeit gesteigert werden.

Die Vergrößerung des Stromleitungsquerschnitts zwischen dem Kollektor und der Terminalplatte führt auch zu einer Senkung der ohmschen Verluste sowie einer Verringerung der daraus resultierenden Wärmeentwicklung. Hierdurch können auch große und insbesondere länglich geformte Terminalplatten sicher fixiert und Verbiegungen derselben unter der Einwirkung der Verpresskraft bzw. von extern eingeleiteten Kräften vermindert werden.

Bei einer weiteren Ausführungsform wird der mindestens eine Terminalzapfen an dem außenseitigen Ende stoffschlüssig durch Schweißen und/oder Nieten mit der Terminalplatte zum Ausbilden des Batteriepols verbunden. Dies ermöglicht eine technisch einfache Verbindung des Terminalzapfens mit langfristig konstanten elektrischen Eigenschaften.

Der mindestens eine Terminalzapfen kann an die verwendete Verbindungstechnologie angepasst werden, wenn der mindestens eine Terminalzapfen aus zwei entlang einer Axialrichtung miteinander verbundenen Metallen oder aus einem Metall hergestellt ist. Beispielsweise kann der aus einem Metall hergestellte Terminalzapfen besonders vorteilhaft durch Reibschweißen mit einem Kollektor verbunden werden. Ein aus zwei Metallen hergestellter Terminalzapfen bzw. Bi-Metall Terminalzapfen kann Metalle aufweisen, die an Metalle der Terminalplatte und des Kollektors angepasst sind. Diese Maßnahme ermöglicht eine technisch besonders einfache Verbindung des Terminalzapfens mit der Terminalplatte und dem Kollektor durch Schweißen.

Nach einer weiteren Ausführungsform ist die mindestens eine Dichtung als ein O-Ring oder als ein Dichtring mit einem L-förmigen Profil ausgebildet. Bevorzugterweise ragt die mindestens eine Dichtung mit oder ohne eine axial gerichtete Krafteinwirkung axial in den Spalt zwischen dem Terminalzapfen und dem Zelldeckel hinein oder verdeckt den Spalt entlang einer Radialrichtung. Diese Maßnahme kann eine technisch einfache Abdichtung des Spalts der Deckelanordnung mit handelsüblichen Dichtungen ermöglichen.

Nachstehend werden mehrere Ausführungsbeispiele der Erfindung anhand der Zeichnungen näher erläutert. Es zeigen:
Fig. 1-4 schematische Darstellungen zum Veranschaulichen eines Verfahrens zum Herstellen einer Deckelanordnung gemäß einer ersten Ausführungsform der Erfindung,
Fig. 5 schematische Schnittdarstellungen zum Verdeutlichen von Unterschieden einer Deckelanordnung gemäß einer ersten Ausführungsform der Erfindung und einer Deckelanordnung gemäß einem Stand der Technik,
Fig. 6 schematische Schnittdarstellungen zum Veranschaulichen eines Verfahrens zum Herstellen einer Deckelanordnung gemäß einer zweiten Ausführungsform der Erfindung,
Fig. 7 eine schematische Schnittdarstellung zum Veranschaulichen eines Verfahrens zum Herstellen einer Deckelanordnung gemäß einer dritten Ausführungsform der Erfindung, und
Fig. 8 perspektivische Darstellungen einer Batteriezelle mit zwei Deckelanordnungen gemäß einer Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

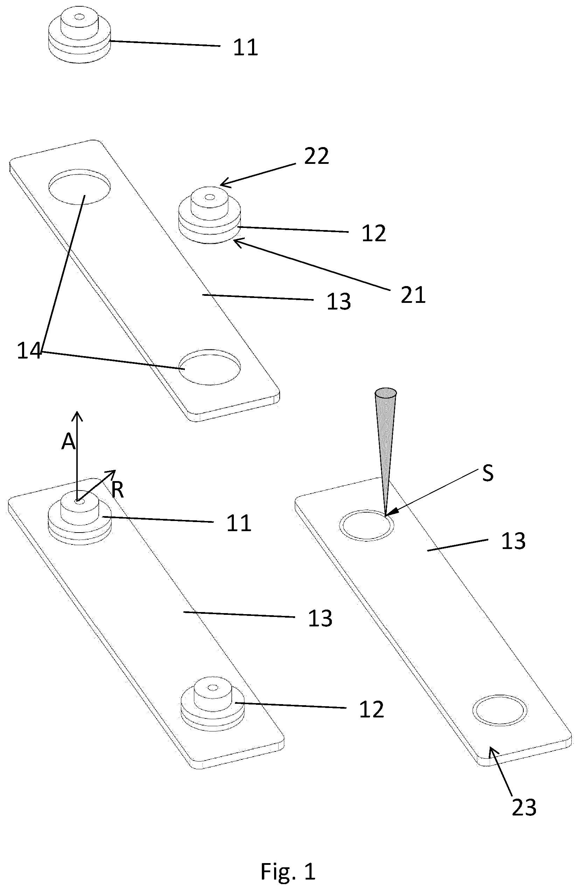

Die Fig. 1-4 zeigen schematische Darstellungen zum Veranschaulichen eines Verfahrens zum Herstellen einer Deckelanordnung 10 gemäß einer ersten Ausführungsform der Erfindung. In der Fig. 1 werden in einem ersten Schritt zwei Terminalzapfen 11, 12 bereitgestellt und mit einem Kollektor 13 stoffschlüssig verbunden.

Im dargestellten Ausführungsbeispiel werden zwei Terminalzapfen 11, 12 verwendet, die entlang einer Axialrichtung A bzw. Axialachse rotationssymmetrisch geformt sind. Insbesondere weisen die Terminalzapfen 11, 12 im Wesentlichen eine Zylinderform auf und können Abstufungen in der Zylinderform aufweisen. Die Terminalzapfen 11, 12 bestehen an einem innenseitigen Ende 21 aus Kupfer und an einem außenseitigen Ende 22 aus einem Aluminium. Somit sind die Terminalzapfen 11, 12 als Bi-Metall-Komponenten ausgestaltet. Hierdurch wird am innenseitigen Ende 21 der Terminalzapfen 11, 12 eine artreine Schweißung S mit einem aus Kupfer hergestellten Kollektor 13 ermöglicht.

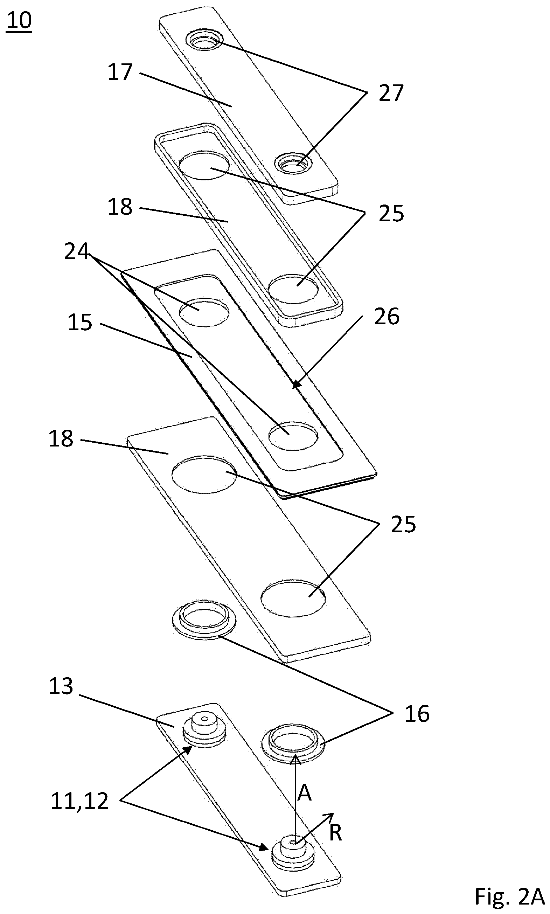

Die Ausgestaltung der Terminalzapfen 11, 12 am außenseitigen Ende 22 aus Aluminium ermöglicht eine artreine Schweißung desrTerminalzapfen 11, 12 mit einer aus Aluminium hergestellten Terminalplatte 17 (Fig. 2A).

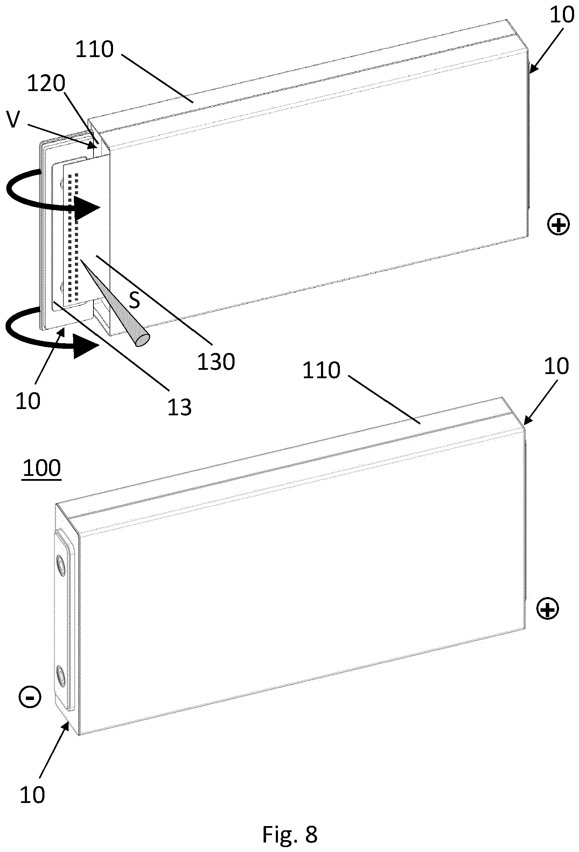

Das innenseitige Ende 21 der Terminalzapfen 11, 12 ist hierbei ein Ende der Terminalzapfen 11, 12, welches in einem in eine Batteriezelle 100 (Fig. 8) eingebauten Zustand einem Innenvolumen V eines Zellgehäuses 110 zugewandt ist.

Das außenseitige Ende 22 der Terminalzapfen 11, 12 ist als ein Ende der Terminalzapfen 11, 12 definiert, welches in einem in die Batteriezelle 100 eingebauten Zustand vom Innenvolumen V des Zellgehäuses 110 abgewandt ist.

Die im dargestellten Ausführungsbeispiel gezeigten Terminalzapfen 11, 12 sind beispielsweise durch Reibschweißung hergestellt und werden zunächst auf den Kollektor 13 geschweißt. Der Kollektor 13 ist hierfür mit Senkungen 14 versehen, in welche die Terminalzapfen 11, 12 zur Positionierung gesteckt und dann von einer Kollektorunterseite 23 her mittels Laser-Überlappschweißung S fixiert werden. Die Senkungen bzw. Vertiefungen 14 weisen eine Querschnittsform auf, die im Wesentlichen einer Querschnittsform der Terminalzapfen 11, 12 am innenseitigen Ende 21 entspricht.

Bei der Laser-Überlappschweißung S muss kein Spalt zwischen dem Kollektor 13 und den Terminalzapfen 11, 12 verschlossen werden, sodass die erforderliche Dichtigkeit der Anbindung der Terminalzapfen 11, 12 an den Kollektor 13 prozesssicher gewährleistet wird.

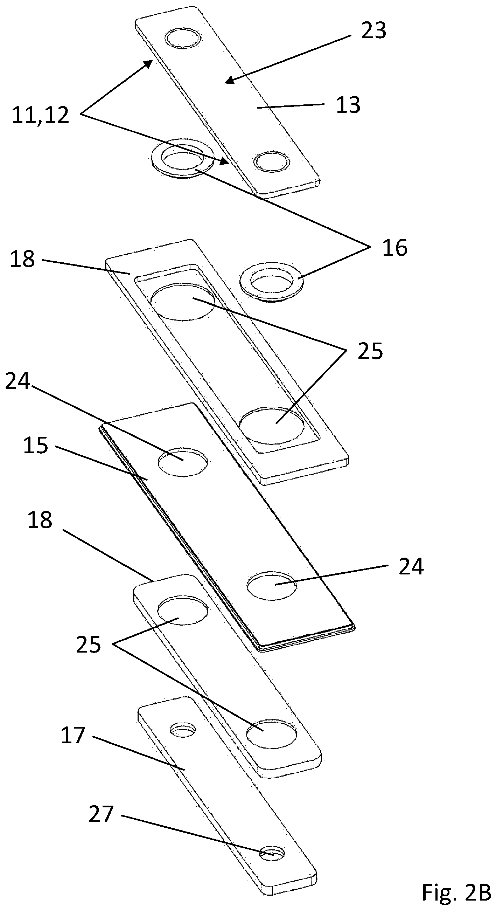

In der Fig. 2A und Fig. 2B sind Explosionsdarstellungen gezeigt, die das Verfahren gemäß dem ersten Ausführungsbeispiel verdeutlichen. Dabei zeigt die Fig. 2A eine Ansicht auf eine Vorderseite und die Fig. 2B eine Ansicht auf die Rückseite der Komponenten der Deckelanordnung 10.

Die Deckelanordnung 10 gemäß dem ersten Ausführungsbeispiel weist zwei Terminalzapfen 11, 12, einen Kollektor 13, einen Zelldeckel 15, zwei Dichtungen 16 und eine Terminalplatte 17 zum Ausbilden eines Batteriepols auf.

Die Terminalzapfen 11, 12 werden an einem innenseitigen Ende 21 stoffschlüssig mit dem Kollektor 13 und an einem außenseitigen Ende 22 stoffschlüssig mit der Terminalplatte 17 verbunden. Die Terminalzapfen 11, 12 ragen entlang der Axialrichtung A durch zwei Öffnungen 24 im Zelldeckel 15 hindurch.

Für eine elektrische Isolierung der Terminalplatte 17 und des Kollektors 13 gegenüber dem Zelldeckel 15 werden die Terminalplatte 17 und der Kollektor 13 durch jeweils einen Isolator 18 von dem Zelldeckel 15 entlang der Axialrichtung A beabstandet. Die Isolatoren 18 weisen ebenfalls Öffnungen 25 auf, welche hinsichtlich ihrer Abmessung und Position mit den Öffnungen 24 im Zelldeckel 15 übereinstimmen. Die Terminalzapfen 11, 12 ragen somit auch durch die Öffnungen 25 in den Isolatoren 18 hindurch.

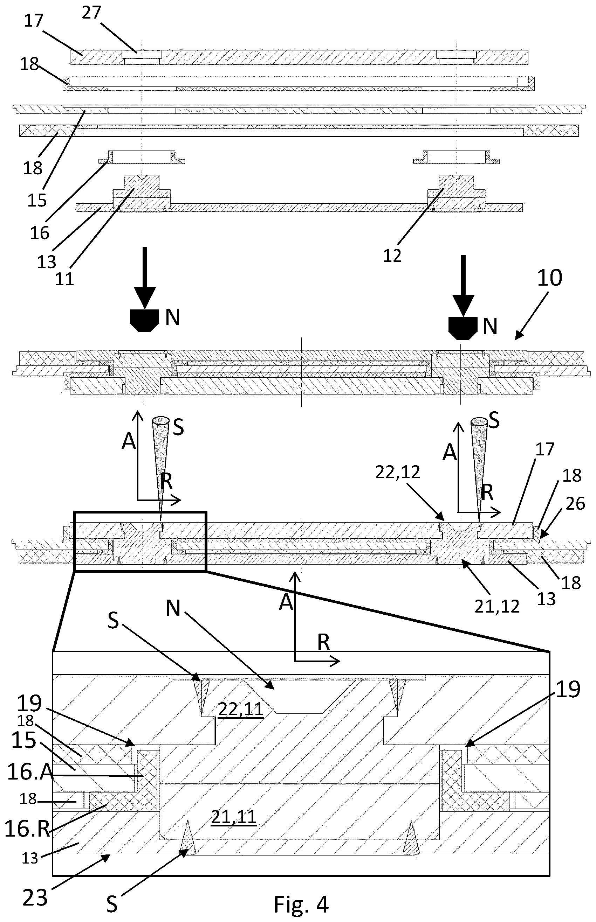

Resultierende Spalte 19 (siehe Fig. 4) zwischen dem Zelldeckel 15 und den Terminalzapfen 11, 12, insbesondere entlang einer Radialrichtung R, quer zur Axialrichtung A, werden durch die Dichtungen 16 verschlossen. Die Anordnung der Dichtungen 16 innerhalb der Deckelanordnung 10 ist besonders übersichtlich in den in Fig. 4 gezeigten Schnittdarstellungen veranschaulicht.

Die Terminalplatte 17 ist ebenfalls mit Öffnungen 26 versehen, in welche die Terminalzapfen 11, 12 an dem außenseitigen Ende 22 hineinragen können, um eine stoffschlüssige Verbindung auszubilden. Darüber hinaus ermöglichen die Öffnungen 26 der Terminalplatte 17 eine technisch einfache Positionierung der Terminalplatte 17 gegenüber dem Kollektor 13. Die mit dem Kollektor 13 verbundenen Terminalzapfen 11, 12 mit aufgesetzten Dichtungen 16 fungieren als Führungsstifte.

Im dargestellten Ausführungsbeispiel sind die Dichtungen 16 ringförmig mit einem L-förmigen Querschnitt ausgestaltet. Die Dichtungen 16 sind dazu eingerichtet, die Terminalzapfen 11, 12 umfangsseitig zu umgreifen.

Durch den L-förmigen Querschnitt der Dichtungen 16 wird ein Abschnitt 16.R der Dichtungen 16, welcher sich in Radialrichtung R erstreckt, zwischen dem Kollektor 13 und dem Zelldeckel 15 geklemmt, da dieser gegenüber der Öffnung 24 im Zelldeckel 15 größeren Durchmesser aufweist. Der Spalt wird somit durch diesen "radialen" Abschnitt 16.R der Dichtung 16 verdeckt.

Ein sich entlang der Axialrichtung A erstreckender Abschnitt 16.A der Dichtungen 16 ragt durch die Öffnung 24 im Zelldeckel 15 und somit durch den Spalt 19 hindurch. Durch diesen "axialen" Abschnitt 16.A der Dichtung 16 erfolgt eine Isolierung der Terminalzapfen 11, 12 gegenüber dem Zelldeckel 15 entlang der Radialrichtung R.

Eine derartige Deckelanordnung 10 wird durch ein Verfahren hergestellt, bei dem die Terminalzapfen 11, 12 in einem Schritt mit den Dichtungen 16 versehen werden. Dieser Schritt erfolgt durch ein mechanisches Positionieren der Dichtungen 16 auf den Mantelflächen der Terminalzapfen 11, 12.Das Herstellungsverfahren ist in der Fig. 4 mit Hilfe von schematischen Schnittdarstellungen veranschaulicht.

In einem weiteren Schritt des Verfahrens werden die Terminalzapfen 11, 12 entlang der Axialrichtung A durch die in den Zelldeckel 15 eingebrachten Öffnungen 24 hindurchgeschoben. Im Vorfeld zu diesem Schritt wird im dargestellten Ausführungsbeispiel ein Isolator 18 auf den Kollektor 13 geschoben, wobei die Terminalzapfen 11, 12 und die Dichtungen 16 durch die Öffnungen 25 im Isolator 18 hindurchragen.

Nach dem Positionieren des Zelldeckels 15 wird ein weiterer Isolator 18 auf den Zelldeckel 15 gelegt, um die Terminalplatte 17 gegenüber dem Zelldeckel 15 elektrisch zu isolieren. Zum Ausrichten des Isolators 18 gegenüber dem Zelldeckel 15 weist der Zelldeckel 15 im dargestellten Ausführungsbeispiel eine Vertiefung 26 mit einem Querschnitt zum Aufnehmen des Isolators 18 der Terminalplatte 17 auf.

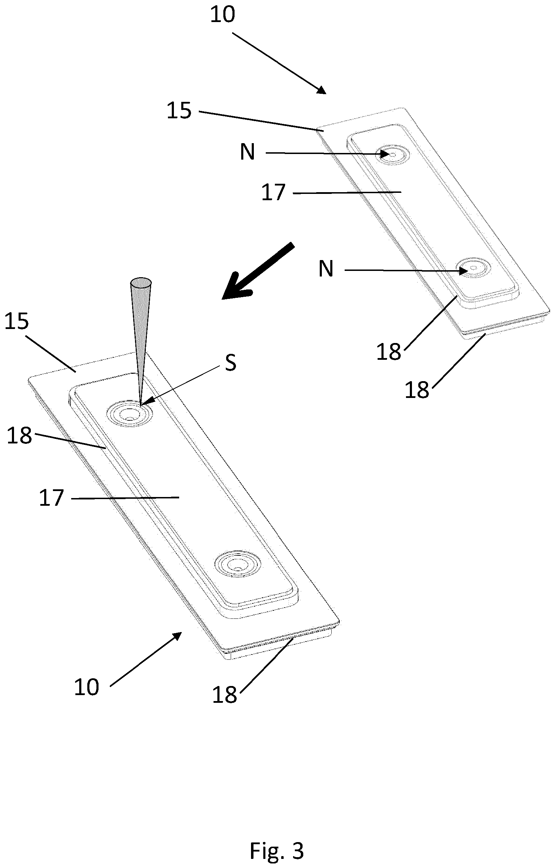

Nach dem vollständigen Positionieren der in Fig. 2A gezeigten Komponenten 11-18 ragen die Terminalzapfen 11, 12 an dem außenseitigen Ende 22 durch Öffnungen 27 in der Terminalplatte 17 und ermöglichen somit ein Vernieten N. Durch diesen Schritt erfolgt auch eine Krafteinwirkung, die mittels der in Fig. 4 gezeigten Pfeile visualisiert ist. Die an den außenseitigen Enden 22 mit der Terminalplatte 17 genieteten Terminalzapfen 11, 12 werden in einem weiteren Schritt des Verfahrens gemäß dem ersten Ausführungsbeispiel durch Laserschweißen S geschweißt. Die Fig. 3 zeigt eine Deckelanordnung 10, bei der die Terminalzapfen 11, 12 durch Vernieten N stoffschlüssig mit der Terminalplatte 17 verbunden sind und anschließend durch Laserschweißen S verschweißt werden.

Die Deckelanordnung 10 wird bereits durch das Vernieten N der Terminalzapfen 11, 12 mit der Terminalplatte 17 hergestellt. Das Verschweißen S der Terminalzapfen 11, 12 kann alternativ oder zusätzlich zum Vernieten N erfolgen, um die Deckelanordnung 10 auszubilden oder zu optimieren.

Durch die Krafteinwirkung werden die Dichtungen 16 in Axialrichtung A zwischen der Terminalplatte 17 und dem Kollektor 13 verpresst und liegen dann fluiddichtend an den entsprechenden Kontaktflächen an. In der Fig. 4 sind die Dichtungen 16 in einem nicht dichtenden Zustand gezeigt, um den Spalt 19 zwischen der Terminalplatte 17, den Terminalzapfen 11, 12 und dem Zelldeckel 15 zu veranschaulichen. Optimalerweise wird durch ein Verpressen bzw. durch die Krafteinwirkung der Spalt 19 zumindest entlang der Axialrichtung A durch die Dichtungen 16 verschlossen bzw. verfüllt.

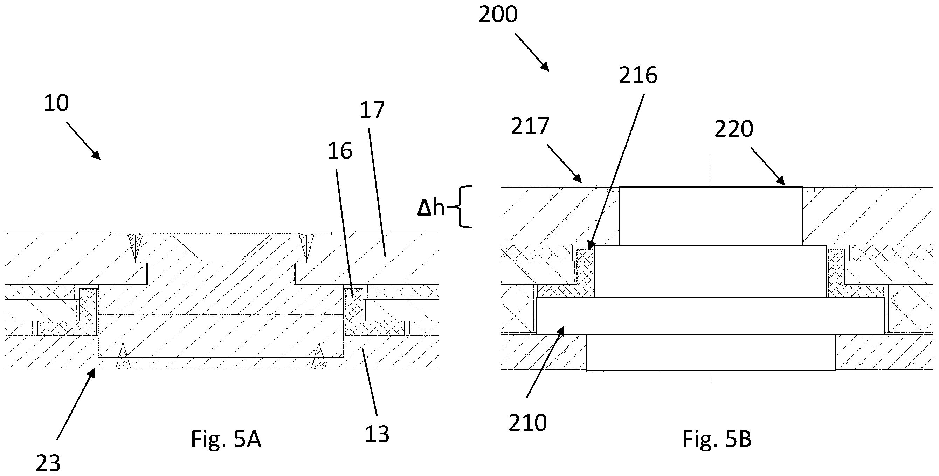

Die Fig. 5 schematische Schnittdarstellungen zum Verdeutlichen von Unterschieden einer Deckelanordnung 10 gemäß der ersten Ausführungsform der Erfindung und einer Deckelanordnung 200 gemäß einem Stand der Technik. Dabei wird insbesondere die Höhendifferenz Δh veranschaulicht, um welche die Deckelanordnung 200 gemäß einem Stand der Technik gegenüber der Deckelanordnung 10 gemäß der ersten Ausführungsform der Erfindung größer ist. Die Fig. 5A zeigt die Deckelanordnung 10 gemäß der ersten Ausführungsform der Erfindung. In der Fig. 5B ist eine Deckelanordnung 200 gemäß dem Stand der Technik gezeigt.

Die Verpressung der Dichtungen 16 erfolgt bei der Deckelanordnung 10 gemäß dem ersten Ausführungsbeispiel nach dem Vernieten N und Verschweißen S durch eine Oberseite des Kollektors 13, welche der Rückseite 23 des Kollektors 13 gegenüberliegend angeordnet ist. Hierdurch kann eine Höhe des nicht mehr benötigten tellerförmigen Bundes 210 von Nieten 220 in der Deckelanordnung 200 gemäß dem Stand der Technik eingespart werden, durch welche eine Dichtung 216 gegenüber einer Terminalplatte 217 verpresst wird.

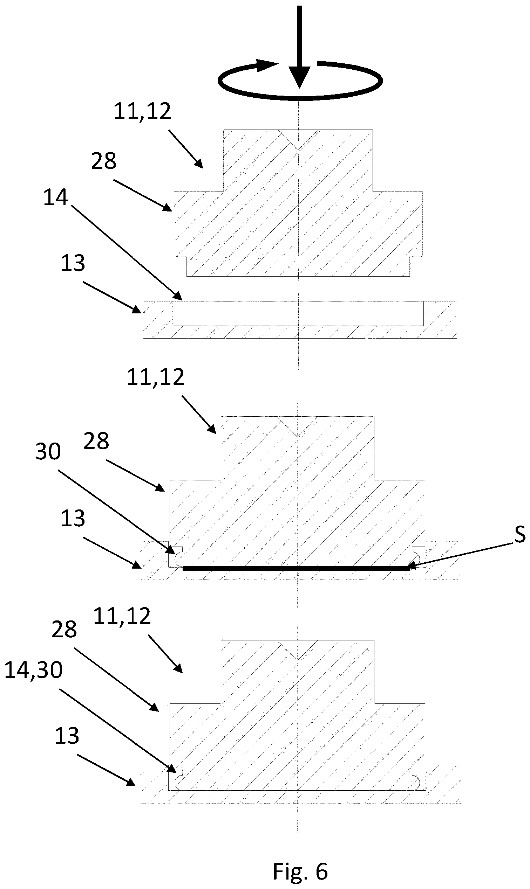

In der Fig. 6 sind schematische Schnittdarstellungen zum Veranschaulichen eines Verfahrens zum Herstellen einer Deckelanordnung 10 gemäß einer zweiten Ausführungsform der Erfindung gezeigt. Im Unterschied zum ersten Ausführungsbeispiel wird ein Terminalzapfen 11 eingesetzt, welcher monolithisch aus einem Metall hergestellt ist. Beispielsweise können zum Ausbilden eines Minuspols als Batteriepol zwei Terminalzapfen 11, 12 verwendet werden, die aus Aluminium-Vollmaterial bestehen und mittels Rotations-Reibschweißung an einem aus Kupfer hergestellten Kollektor 13 angebracht werden. Die Reibschweißung wird durch die Pfeile in der Fig. 6 illustriert.

Die Reibschweißung ermöglicht die stoffschlüssige Verbindung von verschiedenen Metallen, wobei sich an der vollflächigen und damit besonders stromtragfähigen Schweißstelle S zwischen einem Terminalzapfen 11, 12 und dem Kollektor 13 eine intermetallische Al-Cu-Phase bildet. Eine seitlich undefiniert herausgedrückte Schweißwulst 30, von der sich auch einzelne Metallspäne lösen können, kann durch eine zusätzliche Schweißung entlang der Schweißwulst 30 bzw. umfangsseitig entlang der Senkung 14 und/oder durch ein Verwenden Terminalzapfen 11, 12 mit einem Bund 28 verdeckt werden. Nach dem erfolgreichen Reibschweißen liegt der Bund 28 im dargestellten Ausführungsbeispiel auf dem Kollektor 13 auf und verschließt die Senkung 14.

Durch das Verdecken der Schweißwulst 30 mittels des Bundes 28 wird auch der Zutritt von Elektrolyt aus einem Zellinneren der Batteriezelle 100 an die Reibschweißung verhindert, welche andernfalls durch die Bildung eines Lokalelementes zu elektrochemischer Korrosion führen würde.

Der nicht dargestellte, entsprechende als Pluspol ausgebildete Batteriepol kann in einer gleichen Geometrie ausgeführt sein. Entsprechender Kollektor 13 des Pluspols kann aus Aluminium hergestellt sein.

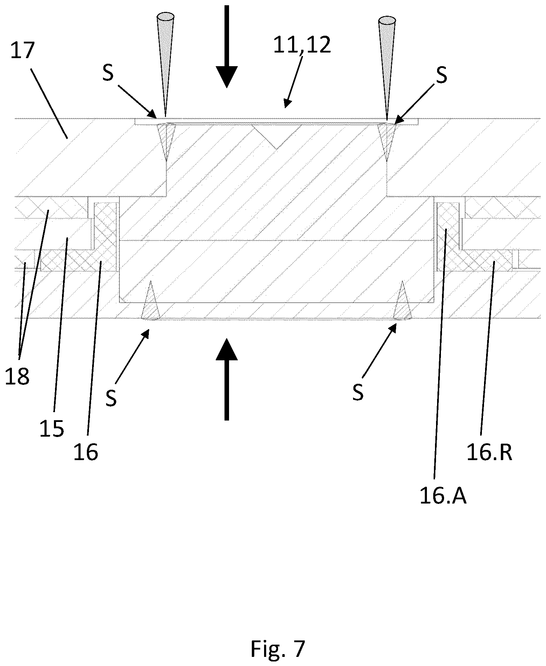

In der Fig. 7 ist eine schematische Schnittdarstellung zum Veranschaulichen eines Verfahrens zum Herstellen einer Deckelanordnung 10 gemäß einer dritten Ausführungsform der Erfindung gezeigt. Alternativ zum ersten Ausführungsbeispiel werden die Terminalzapfen 11, 12 ausschließlich durch Schweißen S mit der Terminalplatte 17 stoffschlüssig verbunden. Die Fig. 7 zeigt einen Terminalzapfen 11, 12, welcher beispielhaft zum Ausbilden eines Minuspols dient. Zum Ermöglichen einer artreinen Schweißverbindung S zwischen dem Terminalzapfen 11, 12 und der Terminalplatte 17 am Pluspol sind der Terminalzapfen 11, 12 am außenseitigen Ende 22 und die Terminalplatte 17 aus einem gleichen Material, beispielsweise Aluminium, ausgebildet. Am innenseitigen Ende 21 können die Terminalzapfen 11, 12 am Pluspol aus Kupfer bestehen, um eine prozesssichere Schweißung S mit dem aus Kupfer hergestellten Kollektor 13 zu ermöglichen.

Durch den Entfall der Nietung N kann die Prozessführung vereinfacht werden. Zum Verpressen der Dichtungen 16 wird eine externe Krafteinwirkung aufgebracht, die die Terminalplatte 17 und den Kollektor 13 während des Schweißvorgangs S in Axialrichtung A zusammendrückt. Durch diese externe Krafteinwirkung, die durch die Pfeile veranschaulicht ist, wird die mindestens eine Dichtung 16 beispielsweise zwischen der Terminalplatte 17 und den Kollektor 13 zusammengedrückt um eine dichtende Wirkung zu erzielen.

Eine Dichtwirkung der mindestens einen Dichtung 16 durch das Verpressen kann zwischen dem Zelldeckel 15 und dem Kollektor 13 und/oder zwischen dem Kollektor 13 und der Terminalplatte 17 und/oder radial zwischen dem Zelldeckel 15 und dem Terminalzapfen 11, 12 ausgebildet werden.

Der nicht dargestellte, Terminalzapfen 11, 12 zum Ausbilden eines Pluspols kann in gleicher Geometrie ausgeführt sein, jedoch vollständig aus Aluminium bestehen, da der Kollektor 13 am Pluspol ebenfalls aus Aluminium ausgebildet sein kann.

Die Fig. 8 zeigt perspektivische Darstellungen zum Veranschaulichen eines Aufbaus einer Batteriezelle 100 mit zwei Deckelanordnungen 10 gemäß einer Ausführungsform der Erfindung. Die Batteriezelle 100 ist beispielhaft in Form einer Lithium-Ionen Zelle ausgestaltet.

Die Batteriezelle 100 weist ein Zellgehäuse 110 auf, welches ein Innenvolumen V ausbildet. Das Zellgehäuse ist starr, insbesondere in Form eines sogenannten Hardcase, ausgestaltet und besteht beispielsweise aus einer Aluminiumlegierung. In dem Innenvolumen V des Zellgehäuses 110 ist mindestens ein Zellstapel 120 angeordnet. Das Zellgehäuse 110 der Batteriezelle 100 ist hier beidseitig einseitig durch Deckelanordnungen 10 verschlossen.

Die Batteriepole bzw. der Pluspol und der Minuspol sind gemäß dem Ausführungsbeispiel den beiden gegenüberliegenden Schmalseiten angeordnet.

Der Zellstapel 120 besteht aus nicht dargestellten Separatoren, Anodenschichten und Kathodenschichten. Bei einem Zusammenbau der Batteriezelle 100 werden die gehefteten Zellverbinder 130 der Kathodenschichten, beispielsweise aus Aluminium, auf den Kollektor 13 der einen Pluspol ausbildenden Deckelanordnung 10 geschweißt S, die geometrisch der bereits beschriebenen Deckelanordnung 10 gleicht, die einen Minuspol der Batteriezelle 100 formt.

Bei der Deckelanordnung 10, die den Minuspol formt, sind der Kollektor 13 und die Terminalzapfen 11, 12 vollständig aus Aluminium ausgeführt. Nach dem Schweißen S der Zellverbinder 130 wird die mit dem Zellstapel 120 verbundene Deckelanordnung 10 um 90° geklappt und das Zellgehäuse 110 verschlossen.

Analog hierzu werden die Zellverbinder 120 aus Kupfer der Anodenschichten mit dem Kollektor 13 des Kollektors des Minuspols verschweißt, der dann um 90° geklappt und in das Zellgehäuse 110 eingepresst wird.

Zum Abschluss erfolgt die Verschweißung der beiden Deckelanordnungen 10 mit dem Zellgehäuse 110, die beispielhaft die Batteriezelle 100 fertigstellt. Das Einfüllen eines Elektrolyts kann vor dem Einpressen der Deckelanordnung 10 oder nach dem Verschweißen der Deckelanordnungen 10 erfolgen, beispielsweise durch eine nicht gezeigte Einfüllöffnung.

## Patentansprüche

1. Verfahren zum Herstellen einer Deckelanordnung (10) für eine Batteriezelle (100), wobei mindestens ein Terminalzapfen (11, 12) an einem innenseitigen Ende (21) mit mindestens einem Kollektor (13) stoffschlüssig verbunden wird, der mindestens eine Terminalzapfen (11, 12) mit zumindest einer Dichtung (16) versehen wird, wobei der mindestens eine Terminalzapfen (11, 12) durch mindestens eine in einen Zelldeckel (15) eingebrachte Öffnung (24) hindurchgeschoben und an einem außenseitigen Ende (22) stoffschlüssig mit einer Terminalplatte (17) zum Ausbilden eines Batteriepols verbunden wird, **dadurch gekennzeichnet, dass** die mindestens eine Dichtung (16) zwischen dem Kollektor (13) und der Terminalplatte (17) verpresst wird und dazu eingerichtet ist, im verpressten Zustand einen Spalt (19) zwischen dem Terminalzapfen (11, 12) in der Öffnung (24) des Zelldeckels (15) abzudichten.

2. Verfahren nach Anspruch 1, wobei der mindestens eine Terminalzapfen (11, 12) formschlüssig in mindestens eine in den Kollektor (13) eingebrachte Senkung (14) oder Öffnung eingesetzt wird, wobei der mindestens eine in die Senkung (14) oder Öffnung eingesetzte Terminalzapfen (11, 12) durch Reibschweißung, durch Löten und/oder durch Schweißen mit dem Kollektor (13) verbunden wird.

3. Verfahren nach Anspruch 2, wobei der mindestens eine Terminalzapfen (11, 12) am innenseitige Ende (21) und am außenseitigen Ende (22) aus einem Metall ausgebildet ist, wobei der mindestens eine, aus einem Metall ausgebildete Terminalzapfen (11, 12) durch Reibschweißen mit dem Kollektor (13) verbunden wird.

4. Verfahren nach Anspruch 3, wobei eine durch die Reibschweißung resultierende Schweißwulst (30) durch ein Einbringen einer Schweißnaht zwischen dem Kollektor (13) und dem mindestens einen Terminalzapfen (11, 12) verschlossen wird, oder wobei der mindestens eine Terminalzapfen (11, 12) einen Bund (28) aufweist, welcher durch das Einbringen der Reibschweißung mit dem Kollektor (13) zur Anlage gebracht wird, wobei die durch die Reibschweißung resultierende Schweißwulst (30) durch den Bund (28) verschlossen wird.

5. Verfahren nach Anspruch 2, wobei der mindestens eine Terminalzapfen (11, 12) am innenseitige Ende (21) und am außenseitigen Ende (22) aus unterschiedlichen Metallen ausgebildet ist, wobei das Metall des Terminalzapfens (11, 12) an dem innenseitigen Ende (21) einem Metall des Kollektors (13) entspricht und das Metall des Terminalzapfens (11, 12) an dem außenseitigen Ende (22) einem Metall der Terminalplatte (17) entspricht.

6. Verfahren nach einem der Ansprüche 1 bis 5, wobei die mindestens eine Dichtung (16) zwischen dem Kollektor (13) und der Terminalplatte (17) durch Vernieten des Terminalzapfens (11, 12) verpresst wird.

7. Verfahren nach einem der Ansprüche 1 bis 6, wobei die mindestens eine Dichtung (16) zwischen dem Kollektor (13) und der Terminalplatte (17) durch eine externe Krafteinwirkung verpresst wird.

8. Verfahren nach einem der Ansprüche 1 bis 7, wobei der Terminalzapfen (11, 12) rotationssymmetrisch, insbesondere im Wesentlichen zylinderförmig, ausgestaltet ist, wobei die zumindest eine Dichtung (16) gegenüber dem Terminalzapfen (11, 12) entlang einer Axialrichtung (A) und/oder Radialrichtung (R) im Bereich des Spalts (19) verpresst wird.

9. Verfahren nach einem der Ansprüche 1 bis 8, wobei mindestens zwei Terminalzapfen (11, 12) an ihren innenseitigen Enden (21) mit einem gemeinsamen Kollektor (13) oder mit jeweils einem Kollektor (13) stoffschlüssig verbunden werden, wobei die Terminalzapfen (11, 12) mit jeweils einer Dichtung (16) versehen werden, wobei die Terminalzapfen (11, 12) durch korrespondierende, in einen Zelldeckel (17) eingebrachte Öffnungen (24) hindurchgeschoben und an außenseitigen Enden (22) stoffschlüssig mit einer gemeinsamen Terminalplatte (17) zum Ausbilden eines Batteriepols verbunden werden, wobei die Dichtungen (16) zwischen dem mindestens einen Kollektor (13) und der Terminalplatte (17) verpresst werden.

10. Verfahren nach einem der Ansprüche 1 bis 9, wobei der mindestens eine Terminalzapfen (11, 12) an dem außenseitigen Ende (21) stoffschlüssig durch Schweißen und/oder Nieten mit der Terminalplatte (17) zum Ausbilden des Batteriepols verbunden wird.

11. Deckelanordnung (10) aufweisend mindestens einen Terminalzapfen (11, 12), mindestens einen Kollektor (13), einen Zelldeckel (15), mindestens eine Dichtung (16) und eine Terminalplatte (17) zum Ausbilden eines Batteriepols, wobei der Terminalzapfen (11, 12) an einem innenseitigen Ende (21) stoffschlüssig mit dem Kollektor (13) und an einem außenseitigen Ende (22) stoffschlüssig mit der Terminalplatte (17) verbunden ist, wobei der mindestens eine Terminalzapfen (11, 12) durch zumindest eine Öffnung (24) im Zelldeckel (25) hindurchragt und mindestens ein Spalt (19) zwischen dem Zelldeckel (15) und dem mindestens einen Terminalzapfen (11, 12) und/oder einen Spalt (19) zwischen dem Zelldeckel 15 und dem Kollektor (13) im Bereich des mindestens einen Terminalzapfens (11, 12) durch die mindestens eine Dichtung (16) verschlossen ist, wobei die Dichtung (16) zwischen der Terminalplatte (17) und dem Kollektor (13) verpresst ist.

12. Deckelanordnung nach Anspruch 11, wobei der mindestens eine Terminalzapfen aus zwei entlang einer Axialrichtung miteinander verbundenen Metallen oder aus einem Metall hergestellt ist.

13. Deckelanordnung nach Anspruch 11 oder 12, wobei die mindestens eine Dichtung (16) als ein O-Ring oder als ein Dichtring mit einem L-förmigen Profil ausgebildet ist, wobei die mindestens eine Dichtung (16) mit oder ohne eine axial gerichtete Krafteinwirkung axial in den Spalt (16) zwischen dem Terminalzapfen (11, 12) und dem Zelldeckel (15) hineinragt oder den Spalt (19) entlang einer Radialrichtung (R) verdeckt.

14. Batteriezelle (100), insbesondere in Form einer Lithium-Ionen Zelle, aufweisend ein Zellgehäuse (110) mit mindestens einem in einem Innenvolumen (V) des Zellgehäuses (110) angeordneten Zellstapel (120), wobei das Zellgehäuse (110) zumindest einseitig durch eine Deckelanordnung (10) gemäß einem der Ansprüche 11 bis 13 verschlossen ist.

## Geänderte Patentansprüche

### Geänderte Patentansprüche gemäss Regel 137(2) EPÜ.

1. Verfahren zum Herstellen einer Deckelanordnung (10) für eine Batteriezelle (100), wobei mindestens zwei Terminalzapfen (11, 12) an ihren innenseitigen Enden (21) mit mindestens einem gemeinsamen Kollektor (13) stoffschlüssig verbunden werden, wobei die Terminalzapfen (11, 12) mit jeweils zumindest einer Dichtung (16) versehen werden, wobei die Terminalzapfen (11, 12) durch korrespondierende, in einen Zelldeckel (15) eingebrachte Öffnungen (24) hindurchgeschoben und an außenseitigen Enden (22) stoffschlüssig mit einer gemeinsamen Terminalplatte (17) zum Ausbilden eines Batteriepols verbunden werden, wobei die Dichtungen (16) zwischen dem Kollektor (13) und der Terminalplatte (17) verpresst werden und dazu eingerichtet sind, im verpressten Zustand jeweils einen Spalt (19) zwischen den Terminalzapfen (11, 12) und dem Zelldeckel (15) in den Öffnungen (24) des Zelldeckels (15) abzudichten.

2. Verfahren nach Anspruch 1, wobei der mindestens eine Terminalzapfen (11, 12) formschlüssig in mindestens eine in den Kollektor (13) eingebrachte Senkung (14) oder Öffnung eingesetzt wird, wobei der mindestens eine in die Senkung (14) oder Öffnung eingesetzte Terminalzapfen (11, 12) durch Reibschweißung, durch Löten und/oder durch Schweißen mit dem Kollektor (13) verbunden wird.

3. Verfahren nach Anspruch 2, wobei der mindestens eine Terminalzapfen (11, 12) am innenseitige Ende (21) und am außenseitigen Ende (22) aus einem Metall ausgebildet ist, wobei der mindestens eine, aus einem Metall ausgebildete Terminalzapfen (11, 12) durch Reibschweißen mit dem Kollektor (13) verbunden wird.

4. Verfahren nach Anspruch 3, wobei eine durch die Reibschweißung resultierende Schweißwulst (30) durch ein Einbringen einer Schweißnaht zwischen dem Kollektor (13) und dem mindestens einen Terminalzapfen (11, 12) verschlossen wird, oder wobei der mindestens eine Terminalzapfen (11, 12) einen Bund (28) aufweist, welcher durch das Einbringen der Reibschweißung mit dem Kollektor (13) zur Anlage gebracht wird, wobei die durch die Reibschweißung resultierende Schweißwulst (30) durch den Bund (28) verschlossen wird.

5. Verfahren nach Anspruch 2, wobei der mindestens eine Terminalzapfen (11, 12) am innenseitige Ende (21) und am außenseitigen Ende (22) aus unterschiedlichen Metallen ausgebildet ist, wobei das Metall des Terminalzapfens (11, 12) an dem innenseitigen Ende (21) einem Metall des Kollektors (13) entspricht und das Metall des Terminalzapfens (11, 12) an dem außenseitigen Ende (22) einem Metall der Terminalplatte (17) entspricht.

6. Verfahren nach einem der Ansprüche 1 bis 5, wobei die mindestens eine Dichtung (16) zwischen dem Kollektor (13) und der Terminalplatte (17) durch Vernieten des Terminalzapfens (11, 12) verpresst wird.

7. Verfahren nach einem der Ansprüche 1 bis 6, wobei die mindestens eine Dichtung (16) zwischen dem Kollektor (13) und der Terminalplatte (17) durch eine externe Krafteinwirkung verpresst wird.

8. Verfahren nach einem der Ansprüche 1 bis 7, wobei der Terminalzapfen (11, 12) rotationssymmetrisch, insbesondere im Wesentlichen zylinderförmig, ausgestaltet ist, wobei die zumindest eine Dichtung (16) gegenüber dem Terminalzapfen (11, 12) entlang einer Axialrichtung (A) und/oder Radialrichtung (R) im Bereich des Spalts (19) verpresst wird.

9. Verfahren nach einem der Ansprüche 1 bis 8, wobei der mindestens eine Terminalzapfen (11, 12) an dem außenseitigen Ende (21) stoffschlüssig durch Schweißen und/oder Nieten mit der Terminalplatte (17) zum Ausbilden des Batteriepols verbunden wird.

10. Deckelanordnung (10) aufweisend mindestens einen Terminalzapfen (11, 12), mindestens einen Kollektor (13), einen Zelldeckel (15), mindestens eine Dichtung (16) und eine Terminalplatte (17) zum Ausbilden eines Batteriepols, wobei der Terminalzapfen (11, 12) an einem innenseitigen Ende (21) stoffschlüssig mit dem Kollektor (13) und an einem außenseitigen Ende (22) stoffschlüssig mit der Terminalplatte (17) verbunden ist, wobei der mindestens eine Terminalzapfen (11, 12) durch zumindest eine Öffnung (24) im Zelldeckel (25) hindurchragt und mindestens ein Spalt (19) zwischen dem Zelldeckel (15) und dem mindestens einen Terminalzapfen (11, 12) und/oder einen Spalt (19) zwischen dem Zelldeckel 15 und dem Kollektor (13) im Bereich des mindestens einen Terminalzapfens (11, 12) durch die mindestens eine Dichtung (16) verschlossen ist, wobei die Dichtung (16) zwischen der Terminalplatte (17) und dem Kollektor (13) verpresst ist.

11. Deckelanordnung nach Anspruch 10, wobei der mindestens eine Terminalzapfen aus zwei entlang einer Axialrichtung miteinander verbundenen Metallen oder aus einem Metall hergestellt ist.

12. Deckelanordnung nach Anspruch 10 oder 11, wobei die mindestens eine Dichtung (16) als ein O-Ring oder als ein Dichtring mit einem L-förmigen Profil ausgebildet ist, wobei die mindestens eine Dichtung (16) mit oder ohne eine axial gerichtete Krafteinwirkung axial in den Spalt (16) zwischen dem Terminalzapfen (11, 12) und dem Zelldeckel (15) hineinragt oder den Spalt (19) entlang einer Radialrichtung (R) verdeckt.

13. Batteriezelle (100), insbesondere in Form einer Lithium-Ionen Zelle, aufweisend ein Zellgehäuse (110) mit mindestens einem in einem Innenvolumen (V) des Zellgehäuses (110) angeordneten Zellstapel (120), wobei das Zellgehäuse (110) zumindest einseitig durch eine Deckelanordnung (10) gemäß einem der Ansprüche 10 bis 12 verschlossen ist.
